# EUROPÄISCHE PATENTSCHRIFT

(11) **EP 4 069 538 B1**
(45) Veröffentlichungstag und Bekanntmachung des Hinweises auf die Patenterteilung: **11.12.2024**
(21) Anmeldenummer: 20808292.5
(22) Anmeldetag: 21.10.2020
(51) Int. Cl.: B60K 6/387, B60K 6/44, B60K 6/442, B60K 6/40

(54) **ANTRIEBSEINHEIT UND ANTRIEBSANORDNUNG**
DRIVE UNIT AND DRIVE ASSEMBLY
UNITÉ D'ENTRAÎNEMENT ET ENSEMBLE D'ENTRAÎNEMENT

(30) Priorität: 04.12.2019 DE 102019132941
(43) Veröffentlichungstag der Anmeldung: 12.10.2022
(73) Patentinhaber: Schaeffler Technologies AG & Co. KG, 91074 Herzogenaurach (DE)
(72) Erfinder: LEHMANN, Steffen, 76275 Ettlingen (DE)
(86) Internationale Anmeldenummer: PCT/DE2020/100907
(87) Internationale Veröffentlichungsnummer: WO 2021/110194

(56) Entgegenhaltungen:
- EP-A2- 1 464 876
- WO-A1-2011/054097
- WO-A2-2008/025520
- IT-A1- MO20 120 044
- US-B1- 9 140 343

## Beschreibung

Die Erfindung betrifft eine Antriebseinheit für einen Antriebsstrang eines elektrisch antreibbaren Kraftfahrzeugs, insbesondere eines Hybridkraftfahrzeuges, sowie eine Antriebsanordnung.

Aus dem Stand der Technik sind diverse Antriebseinheiten bekannt, die in Antriebsanordnungen oder Antriebssträngen integriert sind.

Die DE 11 2015 006 071 T5 offenbart ein Hybridfahrzeugantriebssystem mit einem Generator, der unter Verwendung der Leistung eines Verbrennungsmotors elektrische Energie generieren kann; einem Elektromotor, der durch elektrische Energie angetrieben wird, um Räder anzutreiben; einem Gehäuse, das den Generator und den Elektromotor aufnimmt, und mit einer Leistungssteuereinheit zum Steuern des Generators und des Elektromotor. Der Generator und der Elektromotor sind dabei nebeneinander auf einer gleichen Achse in dem Gehäuse angeordnet.

In der WO 2019 101 264 A1 ist ein Antriebsstrang für ein Hybridkraftfahrzeug offenbart. Der Antriebsstrang umfasst eine Getriebeeingangswelle, die über einen ersten Teilantriebsstrang mit einer ersten elektrischen Maschine und einer Verbrennungskraftmaschine zur Drehmomentübertragung in Wirkbeziehung steht und die über einen zweiten Teilantriebsstrang mit einer zweiten elektrischen Maschine zur Drehmomentübertragung in Wirkbeziehung steht. Die beiden elektrischen Maschinen sind dabei koaxial sowie axial benachbart zueinander angeordnet.

Aus der EP 1 464 876 A2 ist ein Antriebsstrang bekannt, bei dem die beiden elektrischen Maschinen radial und axial ineinander geschachtelt sind. Ferner ist aus der der WO 2011/054097 A1 eine Antriebseinheit bekannt, die auf den Oberbegriff des Anspruchs 1 lesbar ist.

Die US 2016 / 0218584 A1 beschreibt eine Steuerungseinheit, welche zur Steuerung elektrischer Maschinen dient, wobei die Steuerungseinheit an einem Gehäuse der die elektrischen Maschinen umfassenden Antriebseinheit montiert ist. Die Antriebseinheit umfasst dabei zwei elektrische Maschinen, welche koaxial sowie axial benachbart zueinander angeordnet sind.

Eine Antriebseinheit mit mehreren elektrischen Rotationsmaschinen in einer Antriebsanordnung zu integrieren, die für ein Hybridkraftahrzeug vorgesehen ist, unterliegt besonders in axialer Richtung strengen Bauraumanforderungen. Insbesondere bei Einsatz einer derartigen Antriebseinheit in sogenannten Front-Quer-Anordnungen in Kraftfahrzeugen, in welchen die elektrischen Rotationsmaschinen und die Verbrennungskraftmaschine als Frontantriebe eingesetzt werden und eine jeweilige Rotationsachse einer elektrischen Rotationsmaschine und der Verbrennungskraftmaschine quer zur Längsrichtung des Kraftfahrzeugs angeordnet ist, ist eine axial besonders kurz bauende Antriebsanordnung vorteilhaft.

Hiervon ausgehend liegt der vorliegenden Erfindung die Aufgabe zugrunde, eine Antriebseinheit sowie eine damit ausgestattete Antriebsanordnung zur Verfügung zu stellen, die in kostengünstiger Ausgestaltung sowie bauraumsparender Weise einen optimalen Betrieb gewährleisten.

Die Aufgabe wird durch die erfindungsgemäße Antriebseinheit nach Anspruch 1 gelöst. Vorteilhafte Ausgestaltungen der Antriebseinheit sind in den Unteransprüchen 2 bis 7 angegeben.

Ergänzend wird eine Antriebsanordnung, welches die Antriebseinheit aufweist, gemäß Anspruch 8 zur Verfügung gestellt. Eine vorteilhafte Ausgestaltung der Antriebsanordnung ist im Unteranspruch 9 angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe "axial" und "radial" beziehen sich im Rahmen der vorliegenden Erfindung immer auf die Rotationsachse der Antriebseinheit, die der Rotationsachse zumindest einer der von der Antriebseinheit umfassten, elektrischen Rotationsmaschinen entspricht.

Die Erfindung betrifft eine Antriebseinheit für einen Antriebsstrang eines elektrisch antreibbaren Kraftfahrzeugs, insbesondere eines Hybridkraftfahrzeuges. Die Antriebseinheit umfasst eine erste elektrische Rotationsmaschine sowie eine zweite elektrische Rotationsmaschine und eine erste Welle sowie eine zweite Welle, wobei ein Rotor der ersten elektrischen Rotationsmaschine drehfest mit der ersten Welle verbunden ist und ein Rotor der zweiten elektrischen Rotationsmaschine drehfest mit der zweiten Welle verbunden ist. Die Antriebseinheit weist weiterhin eine Trennkupplung auf, mit der der Rotor der ersten elektrischen Rotationsmaschine zur Drehmomentübertragung mit der zweiten Welle verbindbar oder verbunden ist. Erfindungsgemäß ist vorgesehen, dass eine der beiden elektrischen Rotationsmaschinen zumindest bereichsweise radial sowie axial innerhalb eines von der jeweils anderen elektrischen Rotationsmaschine radial begrenzten Raums angeordnet ist.

In einer Ausführungsform kann vorgesehen sein, dass die radial innen angeordnete elektrische Rotationsmaschine radial sowie axial vollständig innerhalb eines von der jeweils anderen elektrischen Rotationsmaschine radial begrenzten Raums angeordnet ist.

Die Trennkupplung ist in einem von der ersten elektrischen Rotationsmaschine zur zweiten Welle verlaufenden Drehmoment-Übertragungspfad angeordnet bzw. dazu eingerichtet, diesen Drehmoment-Übertragungspfad zu öffnen und zu schließen. Die Antriebseinheit kann ein Betätigungssystem zur Betätigung der Trennkupplung umfassen, wobei ein Ausrücklager des Betätigungssystems einreihig oder zweireihig ausführbar ist. Erfindungsgemäß sind die Drehachsen der Rotoren der elektrischen Rotationsmaschinen koaxial positioniert.

Die radiale Verschachtelung der beiden elektrischen Rotationsmaschinen bewirkt den Vorteil, dass bei der Herstellung der einzelnen Bleche des Rotor-Pakets und des Stator-Pakets beider elektrischer Rotationsmaschinen aus einer Platine mit einem Stanz-Hub sowohl ein Blech des Rotors der radial inneren elektrischen Rotationsmaschine als auch des Stators der radial inneren elektrischen Rotationsmaschine und auch des Stators der radial äußeren elektrischen Rotationsmaschine sowie des Rotors der radial äußeren elektrischen Rotationsmaschine ausgeschnitten werden kann.

Der Rotor der radial äußeren elektrischen Rotationsmaschine kann zwecks seiner Verbindung zur zweiten Welle von einem Rotorträger getragen sein, welcher mit der zweiten Welle verbunden ist, wobei der Rotor dabei insbesondere kraft- und/oder formschlüssig mit dem Rotorträger verbunden ist und der Rotorträger kraft- und/oder formschlüssig mit der zweiten Welle verbunden ist.

Zwecks drehbarer Lagerung der ersten Welle und/oder der zweiten Welle kann die Antriebseinheit ein Zentrallager bzw. eine zentrale Lagereinheit aufweisen, welches ein- oder mehrteilig ausgestaltet ist, und mittels welchem die erste Welle und/oder die zweite Welle an einem Gehäuse der Antriebseinheit gelagert sind. Der Rotorträger der radial äußeren elektrischen Rotationsmaschine kann dabei unmittelbar über das Zentrallager gelagert sein oder mittelbar über die zweite Welle am Zentrallager gelagert sein. Das Zentrallager ist beispielsweise als Rollen-, Kugel- oder Schrägkugellager ausgestaltet.

Die Antriebseinheit kann ein Befestigungselement umfassen, welches mit der ersten oder zweiten Welle verschraubt ist, zwecks Sicherung der Position des Rotorträgers der radial äußeren elektrischen Rotationsmaschine in Bezug zur Position der zweiten Welle.

Vorteilhafterweise kann die radial innere elektrische Rotationsmaschine als Generator betrieben werden. Der Rotor der radial inneren elektrischen Rotationsmaschine ist relativ klein ausgeführt und hat somit ein geringeres Massenträgheitsmoment als der Rotor der radial äußeren Rotationsmaschine.

Entsprechend kann die radial äußere elektrische Rotationsmaschine vorteilhafterweise als Antriebseinheit eingesetzt werden, da der Rotor dieser elektrischen Rotationsmaschine relativ groß ist und ein entsprechend großes Drehmoment erzeugen kann.

Damit ist nicht ausgeschlossen, dass sowohl die radial innere elektrische Rotationsmaschine als auch die radial äußere elektrische Rotationsmaschine zwecks Antrieb eines mit der Antriebseinheit ausgestatteten Kraftfahrzeugs einsetzbar ist. Beispielsweise kann die radial innere elektrische Rotationsmaschine dazu eingesetzt werden, Drehmoment an eine Eingangsseite der Antriebseinheit zu leiten, sodass ein Start einer an die Eingangsseite anschließbaren Verbrennungskraftmaschine realisiert werden kann. Alternativ kann auch eine oder können auch beide elektrischen Rotationsmaschinen Drehmoment zur Verfügung stellen und zusammen mit einer angeschlossenen Verbrennungskraftmaschine einen Hybrid-Betrieb der Antriebseinheit realisieren.

In einer Ausführungsform ist die erste elektrische Rotationsmaschine zumindest bereichsweise radial sowie axial innerhalb eines von der zweiten elektrischen Rotationsmaschine radial begrenzten Raums angeordnet.

Dabei ist die erste elektrische Rotationsmaschine als Innenläufermotor ausgebildet und die zweite elektrische Rotationsmaschine als Außenläufermotor ausgebildet, wobei der Stator der ersten elektrischen Rotationsmaschine sowie der Stator der zweiten elektrischen Rotationsmaschine mechanisch aneinander fixiert sind. Entsprechend ist in einer Ausführungsform vorgesehen, dass der Rotor der ersten elektrischen Rotationsmaschine innerhalb eines vom Stator der zweiten elektrischen Rotationsmaschine radial begrenzten Raums angeordnet ist.

Gemäß einer ergänzenden Ausführungsform der Erfindung sind die Statoren der beiden elektrischen Rotationsmaschinen auf einem gemeinsamen Stator-Träger angeordnet.

Der Stator-Träger ist wiederum an einem Gehäuse der Antriebseinheit fixiert. Insbesondere kann dieser Stator-Träger hinsichtlich seiner radialen Position zwischen den Statoren der beiden elektrischen Rotationsmaschinen angeordnet sein und mit diesen mechanisch verbunden sein, sodass der Stator-Träger beide Statoren fixiert.

Gemäß einer alternativen Ausführungsform sind die Statoren der beiden elektrischen Rotationsmaschinen integrale Bestandteile einer Stator-Einheit.

Diese Stator-Einheit kann wiederum an einem Gehäuse der Antriebseinheit fixiert sein. Diese alternative Ausgestaltungsform nutzt also keinen extra Stator-Träger zwischen den einzelnen Statoren, sondern umfasst eine kompakte Einheit, die lediglich durch die beiden Statoren ausgebildet ist.

Die Fixierung der Stator-Einheit an einem Gehäuse der Antriebseinheit kann durch mehrere Schraubverbindungen realisiert sein. Eine jeweilige Schraube einer Schraubverbindung ist dabei insbesondere in axialer Richtung durch die Stator-Einheit durchgeführt und in einem Gehäuse der Antriebseinheit verschraubt.

In einer Ausführungsform der Antriebseinheit umfasst diese ein erstes Gehäuse sowie ein zweites Gehäuse, welche zusammen einen Gehäuseinnenraum definieren, in welchem die beiden elektrischen Rotationsmaschinen angeordnet sind und in welchem die erste Welle und die zweite Welle zumindest bereichsweise angeordnet sind.

Insbesondere ist ein gemeinsamer Stator-Träger oder eine Stator-Einheit mit dem ersten Gehäuse mechanisch verbunden, wobei die Rotoren der beiden elektrischen Rotationsmaschinen am zweiten Gehäuse gelagert sind.

Insbesondere kann die zweite Welle am zweiten Gehäuse gelagert sein, wobei die erste Welle am ersten Gehäuse und an der zweiten Welle gelagert sein kann.

Zudem kann eine Leistungselektronik zur Steuerung der elektrischen Rotationsmaschinen vom zweiten Gehäuse getragen sein.

Erfindungsgemäß sind die beiden Wellen koaxial angeordnet. Zu diesem Zweck ist vorgesehen, dass sie zweite Welle als Hohlwelle ausgestaltet ist und die erste Welle abschnittsweise innerhalb der zweiten Welle verläuft.

Gemäß einer weiteren Ausführungsform umfasst die Antriebseinheit eine erste Übersetzungsstufe, wobei die erste Übersetzungsstufe durch ein Anschlusselement der Antriebseinheit, welches ein innenverzahntes Zahnrad umfasst, und die erste Welle, welche ein Element mit einer Außenverzahnung aufweist, ausgebildet ist, wobei die Verzahnung des innenverzahnten Zahnrades sowie die Außenverzahnung zwecks Übertragung der Drehbewegung vom Anschlusselement auf die erste Welle miteinander kämmen.

Entsprechend ist die erfindungsgemäße Antriebseinheit als ein sogenanntes HybridGetriebe ausgestaltet. Das bedeutet also, dass die Antriebseinheit neben den elektrischen Rotationsmaschinen und den Wellen auch ein Getriebe umfasst. Insbesondere kann das Element mit der Außenverzahnung ein drehfest auf der ersten Welle angeordnetes Zahnrad sein.

Erfindungsgemäß weist die Antriebseinheit eine zweite Übersetzungsstufe auf, welche durch eine Verzahnung, insbesondere eine Außenverzahnung, der zweiten Welle und ein erstes, mit der Verzahnung der zweiten Welle kämmendes, Zahnrad ausgebildet ist.

In einer Ausführungsform, in der die Antriebseinheit ein Getriebe aufweist, kann das erste Zahnrad drehfest mit einer Zwischenwelle des Getriebes gekoppelt sein. Dieses Getriebe kann im Abtriebsbereich ein Differenzial-Getriebe umfassen. Dabei kann eine Außenverzahnung der Zwischenwelle mit einem Eingangs-Zahnrad des Differenzial-Getriebes kämmen, wodurch eine dritte Übersetzungsstufe realisiert wird. Die zweite Welle fungiert somit hier als Getriebeeingangswelle und steht mit dem Getriebe in Wirkverbindung, so dass ein von der zweiten Welle zur Verfügung gestelltes Drehmoment bzw. die von der zweiten Welle realisierte Drehbewegung über das Getriebe über- oder untersetzt an eine weitere Getriebeeinheit eines Kraftfahrzeugs geleitet werden kann, oder auch direkt auf Antriebsräder eines Kraftfahrzeuges geleitet werden kann.

Die erfindungsgemäße Antriebseinheit weist den Vorteil auf, dass durch die axiale Schachtelung der elektrischen Rotationsmaschinen axial deutlich weniger Bauraum benötigt wird als in herkömmlichen Antriebseinheiten mit zwei elektrischen Rotationsmaschinen.

Des Weiteren wird erfindungsgemäß eine Antriebsanordnung zur Verfügung gestellt, die eine erfindungsgemäße Antriebseinheit sowie eine Verbrennungskraftmaschine aufweist, wobei ein Abtriebselement der Verbrennungskraftmaschine drehfest mit dem Rotor der ersten elektrischen Rotationsmaschine gekoppelt oder koppelbar ist.

Im Betrieb eines Kraftfahrzeugs, insbesondere eines Hybridfahrzeugs, mit einer erfindungsgemäßen Antriebsanordnung, umfassend eine erfindungsgemäße Antriebseinheit sowie eine Verbrennungskraftmaschine, werden z.B. folgende Fahrbetriebsmodi ermöglicht:
- Elektrisches Fahren und Rekuperieren:
   Die Trennkupplung ist geöffnet, wodurch die zweite elektrische Rotationsmaschine von der ersten elektrischen Rotationsmaschine und der Verbrennungskraftmaschine abgekoppelt ist. Die zweite elektrische Rotationsmaschine wird somit separat als Traktionsmaschine oder als Generator angesteuert. Die Verbrennungskraftmaschine und die erste elektrische Rotationsmaschine sind nicht in Betrieb.
- Seriell Fahren und Laden:
   Die Trennkupplung ist geöffnet. Die Verbrennungskraftmaschine wird mittels der ersten elektrischen Rotationsmaschine gestartet, wobei die Verbrennungskraftmaschine die erste elektrische Rotationsmaschine antreiben kann und folglich die erste elektrische Rotationsmaschine als Generator angesteuert wird, um die Batterie des Kraftfahrzeugs zu laden. Die zweite elektrische Rotationsmaschine wird als Traktionsmaschine angesteuert.
- Paralleler Hybridantrieb, Laden und Boosten:
   Die Trennkupplung ist geschlossen, wodurch die erste elektrische Rotationsmaschine, die zweite elektrische Rotationsmaschine sowie die Verbrennungskraftmaschine miteinander gekoppelt sind. Das Kraftfahrzeug wird mittels der Verbrennungskraftmaschine und / oder einer oder beider elektrischen Rotationsmaschinen angetrieben. Die beiden elektrischen Rotationsmaschinen können hier als Traktionsmaschine oder als Generator angesteuert werden.
In weiterer Ausgestaltung umfasst die Antriebsanordnung auch wenigstens eine Radantriebswelle, an welcher Räder eines mit der Antriebsanordnung ausgestalteten Kraftfahrzeugs anzuordnen sind, und welche über das Getriebe der Antriebseinheit mit der zweiten Welle der Antriebseinheit verbunden ist, sodass eine von der zweiten Welle realisierte Drehbewegung durch das Getriebe auf die Radantriebswelle und damit auf die Räder übertragen werden kann.

Gemäß einer Ausführungsform der Antriebsanordnung umfasst die Antriebsanordnung einen mit dem Anschlusselement der Antriebseinheit drehfest verbundenen Schwingungsdämpfer sowie ein mechanisch an die Verbrennungskraftmaschine angeschlossenes Gehäuseelement, wobei der Schwingungsdämpfer in dem Gehäuseelementangeordnet ist.

Das Gehäuseelement ist dabei vorteilhafterweise an das zweite Gehäuse der Antriebseinheit angeschlossen.

Im Gehäuseelement kann ein Pumpenaktor eines Kühlkreislaufs der Antriebseinheit gelagert sein.

Weiterhin kann vorgesehen sein, die Zwischenwelle und/oder die Radantriebswelle axial einerseits im Gehäuseelement und andererseits im zweiten Gehäuse zu lagern.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Fig. 1:: eine schematische Darstellung einer erfindungsgemäßen Antriebsanordnung mit erfindungsgemäßer Antriebseinheit,
- Fig. 2:: einen Ausschnitt der erfindungsgemäßen Antriebsanordnung in geschnittener Seitenansicht,
- Fig. 3:: einen Ausschnitt der erfindungsgemäßen Antriebseinheit im Bereich der elektrischen Rotationsmaschinen und
- Fig. 4:: einen Ausschnitt einer erfindungsgemäßen Antriebseinheit im Bereich der elektrischen Rotationsmaschinen in einer alternativen Ausführungsform.

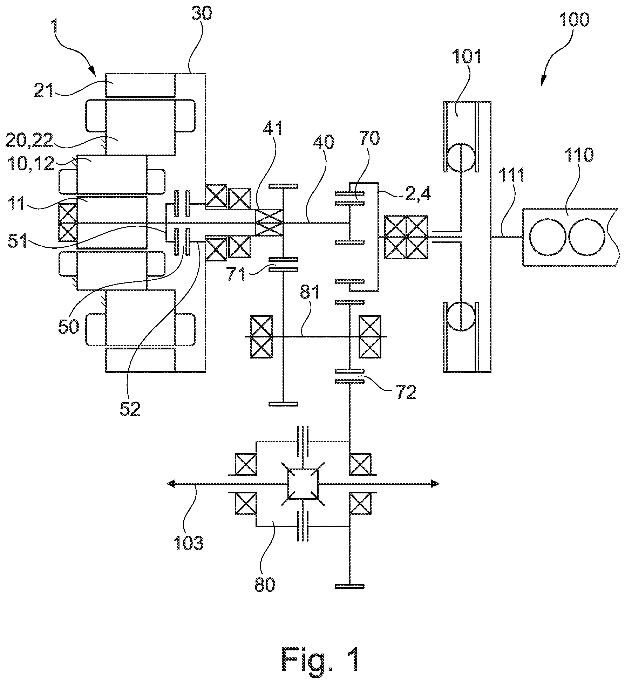

In Fig. 1 ist eine schematische Darstellung einer erfindungsgemäßen Antriebsanordnung 100 mit einer erfindungsgemäßen Antriebseinheit 1 dargestellt. Die Antriebseinheit 1 umfasst eine erste elektrische Rotationsmaschine 10, eine zweite elektrische Rotationsmaschine 20, eine erste Welle 40 sowie eine zweite Welle 41.

Des Weiteren umfasst die Antriebsanordnung 100 eine Verbrennungskraftmaschine 110 und einen Schwingungsdämpfer 101, wobei ein Abtriebselement 111 der Verbrennungskraftmaschine 110 mit dem Schwingungsdämpfer 101 gekoppelt ist. Der Schwingungsdämpfer 101 ist außerdem mit einem Anschlusselement 4 der Antriebsanordnung 1 verbunden, welches als eine Eingangsseite 2 der Antriebsanordnung 1 fungiert. Die Verbrennungskraftmaschine 110 ist damit über den Schwingungsdämpfer 110 mit der Antriebsanordnung 1 gekoppelt.

Das Anschlusselement 4 ist mit der ersten Welle 40 derart gekoppelt, dass eine erste Übersetzungsstufe 70 zwischen dem Anschlusselement 4 und der ersten Welle 40 ausgebildet ist.

Ein Rotor 11 der ersten elektrische Rotationsmaschine 10 ist mit der ersten Welle 40 drehfest verbunden und ein Rotor 21 der zweiten elektrische Rotationsmaschine 20 ist mit der zweiten Welle 41 drehfest verbunden. Die Verbindung des Rotors 11 der ersten elektrischen Rotationsmaschine 10 mit der ersten Welle 40 ist derart realisiert, dass der Rotor 11 der ersten elektrische Rotationsmaschine 10 direkt auf der ersten Welle 40 angeordnet ist. Der Rotor 21 der zweiten elektrischen Rotationsmaschine 20 ist hingegen von einem Rotorträger 30 getragen und der Rotorträger 30 ist mit der zweiten Welle 41 verbunden.

Die erste elektrische Rotationsmaschine 10 ist radial sowie bereichsweise axial innerhalb eines von der zweiten elektrischen Rotationsmaschine 20 radial begrenzten Raums angeordnet. Dabei ist die erste elektrische Rotationsmaschine 10 als Innenläufermotor ausgebildet und die zweite elektrische Rotationsmaschine 20 als Außenläufermotor ausgebildet, wobei ein Stator 12 der ersten elektrischen Rotationsmaschine 10 sowie ein Stator 22 der zweiten elektrischen Rotationsmaschine 20 mechanisch aneinander fixiert sind.

Eine Trennkupplung 50 der Antriebseinheit 1 ist mit ihrer Eingangsseite 51 mit der ersten Welle 40 verbunden und mit ihrer Ausgangsseite 52 mit der zweiten Welle 41 verbunden. Die Trennkupplung 50 dient somit zur Drehmomentübertragung zwischen der ersten Welle 40 und der zweiten Welle 41. Entsprechend kann mittels der Trennkupplung 50 ein Drehmoment-Übertagungspfad zwischen dem Rotor 11 der ersten elektrischen Rotationsmaschine 10 und dem Rotor 21 der zweiten elektrischen Rotationsmaschine 20 geöffnet oder geschlossen werden.

Die zweite Welle 41 ist als Hohlwelle ausgestaltet und die erste Welle 40 verläuft abschnittsweise radial innerhalb der zweiten Welle 41. Die beiden Wellen 40, 41 verlaufen somit koaxial zueinander, wobei auch die Rotoren 11, 21 der beiden elektrischen Rotationsmaschinen 10, 20 koaxial zueinander und koaxial zu den Wellen 40, 41 angeordnet sind.

Die zweite Welle 41 ist über eine zweite Übersetzungsstufe 71 mit einer Zwischenwelle 81 verbunden. Die Zwischenwelle 81 verläuft dabei parallel zur zweiten Welle 41.

Die Zwischenwelle 81 ist über eine dritte Übersetzungsstufe 72 mit einem Eingangselement eines Differentialgetriebes 80 der Antriebseinheit 1 zwecks Übertragung von Drehmoment verbunden. Das Differentialgetriebe 80 bildet eine Ausgangsseite 3 der Antriebseinheit 1.

Eine Radantriebswelle 103, an welcher Räder eines mit der Antriebsanordnung 100 ausgestatteten Kraftfahrzeugs anzuordnen sind, bildet den Ausgang des Differentialgetriebes 80, so dass eine von der zweiten Welle 41 realisierte Drehbewegung über die zweite Übersetzungsstufe 71 und die dritte Übersetzungsstufe 72 sowie über das Differenzialgetriebe 80 auf die Radantriebswelle 103 und damit auf die Räder übertragen werden kann.

Ein von der Verbrennungskraftmaschine 110 bereitgestelltes Drehmoment wird über den Schwingungsdämpfer 101 und über die erste Übersetzungsstufe 70 an die erste Welle 40 der Antriebseinheit 1 übertragen. Ist die Trennkupplung 50 dabei geöffnet, wird das Drehmoment der Verbrennungskraftmaschine 110 lediglich an den Rotor 11 der ersten elektrischen Rotationsmaschine 10 geleitet. Derart kann die erste elektrische Rotationsmaschine 10 im Generatorbetrieb zum Laden einer Batterie genutzt werden. Ist die Trennkupplung 50 geschlossen, wird das von der Verbrennungskraftmaschine 110 bereitgestellte Drehmoment von der ersten Welle 40 auf die zweite Welle 41 übertragen. Von der zweiten Welle 41 wird das Drehmoment der Verbrennungskraftmaschine 110 über die zweite Übersetzungsstufe 71 auf die Zwischenwelle 81 und über die dritte Übersetzungsstufe 72 in das Differentialgetriebe 80 geleitet. Über das Differentialgetriebe 80 gelangt das Drehmoment mittels der Radantriebswelle 103 an Räder eines mit der Antriebsanordnung 100 ausgestatteten Kraftfahrzeugs.

Ein vom Rotor 11 der ersten elektrischen Rotationsmaschine 10 bereitgestelltes Drehmoment kann bei geöffneter Trennkupplung 50 über die erste Übersetzungsstufe 70 an die Verbrennungskraftmaschine 110 übertragen werden. Bei geschlossener Trennkupplung 50 über die zweite Übersetzungsstufe 71 und die dritte Übersetzungsstufe 72 an das Differentialgetriebe 80 und damit an die Radantriebswelle 103 übertragen.

Ein vom Rotor 21 der zweiten elektrischen Rotationsmaschine 20 bereitgestelltes Drehmoment wird unabhängig einer Schaltung der Trennkupplung 50 über die zweite Übersetzungsstufe 71 und die dritte Übersetzungsstufe 72 an das Differentialgetriebe 80 und damit an die Radantriebswelle 103 übertragen.

Die Antriebsanordnung 100 kann entsprechend in einer Vielzahl an Fahrbetriebsmodi betrieben werden.

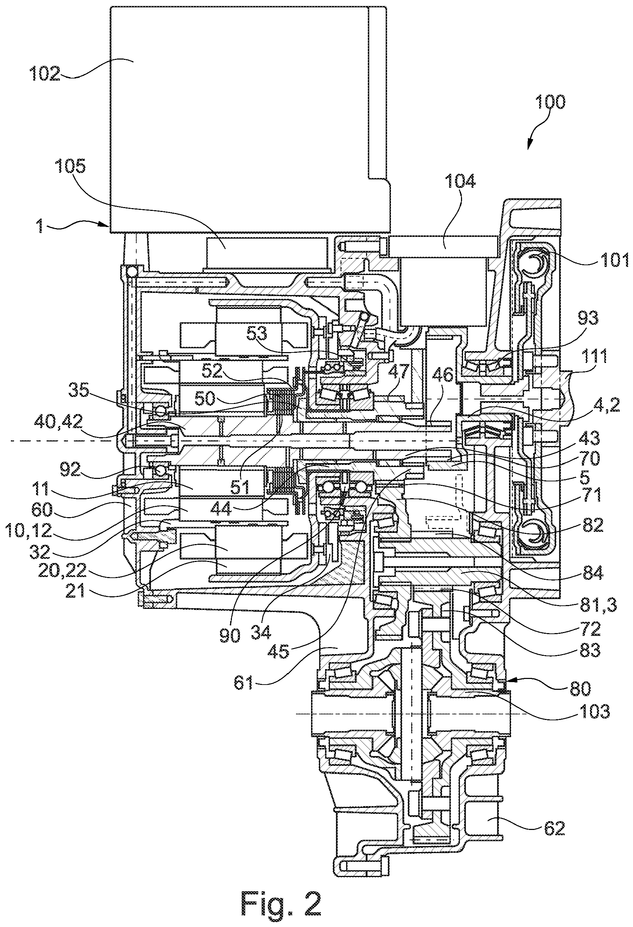

Fig. 2 zeigt einen Ausschnitt der erfindungsgemäßen Antriebsanordnung 100 in geschnittener Seitenansicht.

Die Figur 2 ist eine detailliertere Darstellung einzelner der in Figur 1 angedeuteten Komponenten, wobei in Figur 2 die Verbrennungskraftmaschine nicht gezeigt ist und das an den Schwingungsdämpfer 101 gekoppelte Abtriebselement 111 der Verbrennungskraftmaschine nur teilweise dargestellt ist.

In Figur 2 sind ein erstes Gehäuse 60, ein zweites Gehäuse 61 sowie ein Gehäuseelement 62 erkennbar, welche miteinander verbunden sind und ein Gesamt-Gehäuse der Antriebsanordnung 100 bzw. der Antriebseinheit 1 ausbilden. Das erste und zweite Gehäuse 60, 61 dienen der Aufnahme der beiden elektrischen Rotationsmaschinen 10, 20, wobei das Gehäuseelement 62 dazu dient, das erste Gehäuse 60 und das zweite Gehäuse 61 mit einem Gehäuse der Verbrennungskraftmaschine (nicht dargestellt) zu koppeln. Das erste Gehäuse 60 ist dazu in axialer Richtung fest mit dem zweiten Gehäuse 61 verbunden, wobei das Gehäuseelement 62 auf der dem ersten Gehäuse 60 axial gegenüberliegenden Seite des zweiten Gehäuses 61 mit dem zweiten Gehäuse 61 fest verbunden ist.

Die erste Welle 40 ist mit ihrem ersten axialen Endbereich 42 über ein einreihiges Stützlager 92 im ersten Gehäuse 60 gelagert und mit ihrem zweiten axialen Endbereich 43 über ein Nadellager 91 radial innen an einem zweiten axialen Endbereich 45 der zweiten Welle 41 gelagert.

Die zweite Welle 41 ist mit ihrem ersten axialen Endbereich 44 über eine zentrale Lagereinheit 90 am zweiten Gehäuse 61 gelagert. Diese zentrale Lagereinheit 90 umfasst zwei koaxial angeordnete Wälzlager, die axial dicht nebeneinander positioniert sind.

Weiterhin ist ein die Statoren 12, 22 der elektrischen Rotationsmaschinen 10, 20 tragender gemeinsamer Stator-Träger 32 fest mit dem ersten Gehäuse 60 verbunden, so dass die Statoren 12, 22 der elektrischen Rotationsmaschinen 10, 20 vom ersten Gehäuse 60 getragen sind. Der Rotorträger 30 des Rotors 21 der zweiten elektrischen Rotationsmaschine 20 ist mittels eines Wälzlagers der zentralen Lagereinheit 90 am zweiten Gehäuse 61 gelagert. Mit dem Rotorträger 30 ist zudem ein Geberelement eines Rotorlagesensors 34 verbunden, wobei ein Detektorelement des Rotorlagesensors 34 mit dem zweiten Gehäuse 61 verbunden ist, so dass eine Detektion einer Winkelposition und/oder einer Drehgeschwindigkeit des Rotors 21 der zweiten elektrischen Rotationsmaschine 20 bzw. des Rotorträgers 30 von dem Rotorlagesensor 34 durchführbar ist.

Außerdem sind die Zwischenwelle 81 und die Radantriebswelle 103 jeweils auf ihrer den elektrischen Rotationsmaschinen 10, 20 zugewandten axialen Seite im zweiten Gehäuse 61 gelagert und an deren gegenüberliegenden axialen Seite im Gehäuseelement 62 gelagert. Das Anschlusselement 4 der Antriebseinheit 1 ist über eine zweireihige Lagereinheit 93 am Gehäuseelement 62 gelagert. Diese zweireihige Lagereinheit 93 umfasst zwei koaxial angeordnete Wälzlager, die axial dicht nebeneinander positioniert sind. Der Schwingungsdämpfer 101 ist im Gehäuseelement 62 angeordnet.

Die zentrale Lagereinheit 90 sowie das zweireihige Lagereinheit 93 sind dabei zur Verdeutlichung ihrer möglichen Ausgestaltungsformen jeweils in unterschiedlichen, möglichen Ausführungen dargestellt. Die zentrale Lagereinheit 90 ist mit Kegelrollenlagern und mit Schrägkugellagern gezeigt, wobei die zweireihige Lagereinheit 93 mit Kegelrollenlagern gezeigt ist. Allerdings können auch hier, wie zur zentralen Lagereinheit 90 erwähnt, andere Lager eingesetzt werden, wie z.B. Schrägkugellager.

Des Weiteren ist eine Leistungselektronik 102 radial außen auf dem ersten und zweiten Gehäuse 60, 61 angeordnet, wobei die Leistungselektronik 102 zur Steuerung der elektrischen Rotationsmaschinen 10, 20 eingerichtet ist. Zwischen dem zweiten Gehäuse 61 und der Leistungselektronik 102 ist zudem ein Wärmetauscher 105 eines Kühlkreislaufs zur Kühlung zumindest einer der elektrischen Rotationsmaschinen 10, 20 am zweiten Gehäuse 61 angeordnet. Ein Pumpenaktor 104 dieses Kühlkreislaufs ist vom Gehäuseelement 62 getragen.

Figur 2 zeigt außerdem einen detaillierten Aufbau der Übersetzungsstufen 70, 71, 72. Die erste Übersetzungsstufe 70 ist derart ausgebildet, dass das Anschlusselement 4 ein innenverzahntes Zahnrad 5 umfasst, welches mit einer Außenverzahnung 46 am zweiten axialen Endbereich 43 der ersten Welle 40 kämmt.

Die zweite Welle 41 weist ebenfalls eine Außenverzahnung 47 an deren zweitem axialen Endbereich 45 auf, mit welcher sie mit einem ersten Zahnrad 82 in Eingriff steht, wobei das erste Zahnrad 82 drehfest auf der Zwischenwelle 81 angeordnet ist, so dass die zweite Übersetzungsstufe 71 zwischen der zweiten Welle 41 und der Zwischenwelle 81 ausgebildet ist.

Eine Außenverzahnung 84 der Zwischenwelle 81 steht mit einem zweiten Zahnrad 83 als Eingangselement des Differentialgetriebes 80 in Eingriff, wodurch die dritte Übersetzungsstufe 72 zwischen der Zwischenwelle 81 und dem Differentialgetriebe 80 ausgebildet ist.

Die Trennkupplung 50 entspricht einer reibschlüssig schließbaren Lamellenkupplung, deren Eingangsseite 51 durch Innenlamellen ausgebildet ist, welche axial neben dem Rotor 11 der ersten elektrischen Rotationsmaschine 10 auf der ersten Welle 40 angeordnet sind, wobei Außenlamellen der Trennkupplung 50 als deren Ausgangsseite 52 mit der zweiten Welle 41 verbunden sind.

Radial außerhalb der zentralen Lagereinheit 90 ist ein Betätigungssystem 53 zur Betätigung der Trennkupplung 50 am zweiten Gehäuse 61 angeordnet, wobei ein Drucktopf des Betätigungssystems 53 axial durch den Rotorträger 30 hindurchgreift, um eine vom Betätigungssystem 53 bereitgestellte Betätigungskraft an die Trennkupplung 50 zwecks deren Schließung zu übertragen.

Weiterhin ist eine Sicherungsschraube 35 vorgesehen, welche am ersten axialen Endbereich 44 der zweiten Welle 41 in diese eingeschraubt ist, so dass ein Schraubenkopf der Sicherungsschraube 35 eine axial wirkende Vorspannkraft auf den Rotorträger 30 und die beiden Wälzlager der zentralen Lagereinheit 90 wirkt, wodurch die axiale Position des Rotorträgers 30 und der zentralen Lagereinheit 90 in Bezug zur zweiten Welle 41 gesichert ist.

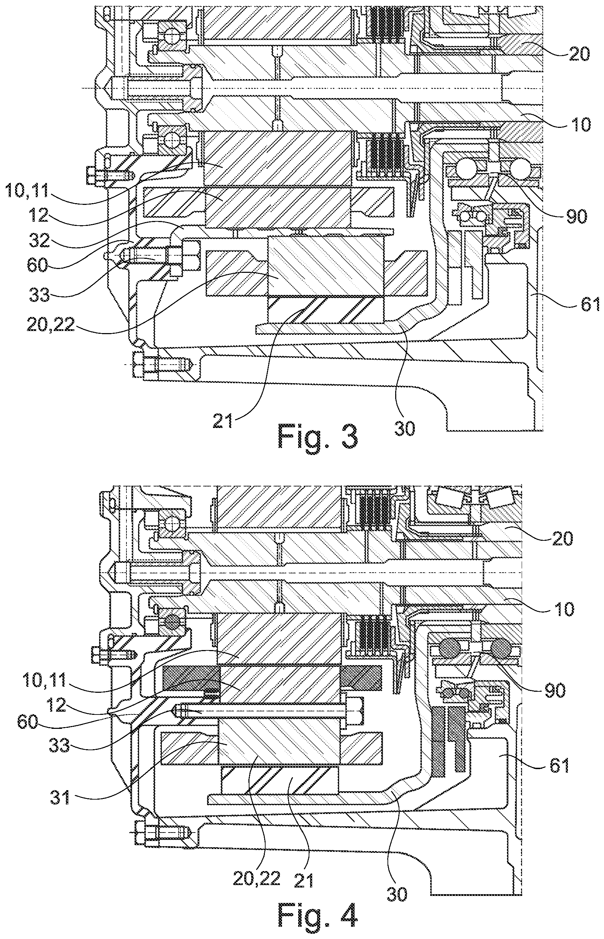

In Fig. 3 ist ein Ausschnitt einer erfindungsgemäßen Antriebseinheit 1 im Bereich der elektrischen Rotationsmaschinen 10, 20 dargestellt.

Der Ausschnitt zeigt eine Antriebseinheit 1, identisch zur Ausführungsform der Antriebseinheit 1 aus Figur 2.

Zu sehen ist in Figur 3, dass der gemeinsame Stator-Träger 32 mittels einer Trägerschraube 33 mit dem ersten Gehäuse 60 verbunden ist. Dazu ist die Trägerschraube 33 axial durch einen radial verlaufenden Abschnitt des gemeinsamen Stator-Trägers 32 geführt und in axialer Richtung im ersten Gehäuse 60 verschraubt.

Zudem ist der auf der radialen Innenseite des gemeinsamen Stator-Trägers 32 getragene Stator 12 der ersten elektrischen Rotationsmaschine 10 axial versetzt zum auf der radialen Außenseite des gemeinsamen Stator-Trägers 32 getragenen Stator 22 der zweiten elektrischen Rotationsmaschine 20.

Alternativ zur Antriebseinheit 1 aus Figur 3 zeigt Figur 4 einen Ausschnitt einer erfindungsgemäßen Antriebseinheit 1 im Bereich der elektrischen Rotationsmaschinen 10, 20 in einer alternativen Ausführungsform. Unterschiedlich zur Figur 3 ist hier, dass die Statoren 12, 22 der beiden elektrischen Rotationsmaschinen 10, 20 integrale Bestandteile einer Stator-Einheit 31 sind. Diese Stator-Einheit 31 ist am ersten Gehäuse 60 durch eine Trägerschraube 33 fixiert, die in axialer Richtung durch die gesamte Stator-Einheit 31 hindurchgeführt ist und im ersten Gehäuse 60 in axialer Richtung verschraubt ist. Diese alternative Ausführungsform nutzt also keinen extra Stator-Träger zwischen den einzelnen Statoren 12, 22, sondern umfasst eine kompakte Einheit, die lediglich durch die beiden Statoren 12, 22 ausgebildet ist.

Mit der erfindungsgemäßen Antriebseinheit sowie der Antriebsanordnung lässt sich in kostengünstiger Ausgestaltung sowie bauraumsparender Weise ein optimaler Betrieb gewährleisten.

### Bezugszeichenliste

- 1: Antriebseinheit
- 2: Eingangsseite der Antriebseinheit
- 3: Ausgangsseite der Antriebseinheit
- 4: Anschlusselement der Antriebseinheit
- 5: innenverzahntes Zahnrad des Anschlusselements

- 10: erste elektrische Rotationsmaschine
- 11: Rotor der ersten elektrischen Rotationsmaschine
- 12: Stator der ersten elektrischen Rotationsmaschine

- 20: zweite elektrische Rotationsmaschine
- 21: Rotor der zweiten elektrischen Rotationsmaschine
- 22: Stator der zweiten elektrischen Rotationsmaschine

- 30: Rotorträger der zweiten elektrischen Rotationsmaschine
- 31: Stator-Einheit
- 32: gemeinsamer Stator-Träger
- 33: Trägerschraube
- 34: Rotorlagesensor
- 35: Sicherungsschraube

- 40: erste Welle
- 41: zweite Welle
- 42: erster axialer Endbereich der ersten Welle
- 43: zweiter axialer Endbereich der ersten Welle
- 44: erster axialer Endbereich der zweiten Welle
- 45: zweiter axialer Endbereich der zweiten Welle
- 46: Außenverzahnung der ersten Welle
- 47: Außenverzahnung der zweiten Welle

- 50: Trennkupplung
- 51: Eingangsseite der Trennkupplung
- 52: Ausgangsseite der Trennkupplung
- 53: Betätigungssystem

- 60: erstes Gehäuse
- 61: zweites Gehäuse
- 62: Gehäuseelement

- 70: erste Übersetzungsstufe
- 71: zweite Übersetzungsstufe
- 72: dritte Übersetzungsstufe

- 80: Differentialgetriebe
- 81: Zwischenwelle
- 82: erstes Zahnrad
- 83: zweites Zahnrad
- 84: Außenverzahnung der Zwischenwelle

- 90: zentrale Lagereinheit
- 91: Nadellager
- 92: Stützlager
- 93: zweireihige Lagereinheit

- 100: Antriebsanordnung
- 101: Schwingungsdämpfer
- 102: Leistungselektronik
- 103: Radantriebswelle
- 104: Pumpenaktor
- 105: Wärmetauscher

- 110: Verbrennungskraftmaschine
- 111: Abtriebselement der Verbrennungskraftmaschine

## Patentansprüche

1. Antriebseinheit (1) für einen Antriebsstrang eines elektrisch antreibbaren Kraftfahrzeugs, insbesondere eines Hybridkraftfahrzeuges, mit einer ersten elektrischen Rotationsmaschine (10) sowie einer zweiten elektrischen Rotationsmaschine (20) und einer ersten Welle (40) sowie einer zweiten Welle (41), wobei ein Rotor (11) der ersten elektrischen Rotationsmaschine (10) drehfest mit der ersten Welle (40) verbunden ist und ein Rotor (21) der zweiten elektrischen Rotationsmaschine (20) drehfest mit der zweiten Welle (41) verbunden ist und wobei die Antriebseinheit (1) weiterhin eine Trennkupplung (50) aufweist, mit der der Rotor (11) der ersten elektrischen Rotationsmaschine (10) zur Drehmomentübertragung mit der zweiten Welle (41) verbindbar oder verbunden ist,
wobei eine der beiden elektrischen Rotationsmaschinen (10, 20) zumindest bereichsweise radial sowie axial innerhalb eines von der jeweils anderen elektrischen Rotationsmaschine (10, 20) radial begrenzten Raums angeordnet ist, die Trennkupplung (50) mit ihrer Eingangsseite (51) mit der ersten Welle (40) und mit ihrer Ausgangsseite (52) mit der zweiten Welle (41) verbunden ist,
die Antriebseinheit (1) eine zweite Übersetzungsstufe (71) aufweist, welche durch eine Verzahnung der zweiten Welle (41) und ein erstes, mit der Verzahnung der zweiten Welle (41) kämmendes, Zahnrad (82) ausgebildet ist,
ein vom Rotor (11) der ersten elektrischen Rotationsmaschine (10) bereitgestelltes Drehmoment bei geschlossener Trennkupplung (50) über die zweite Übersetzungsstufe (71) übertragen wird, und wobei die beiden Wellen (40, 41) koaxial angeordnet sind, die zweite Welle (41) als Hohlwelle ausgestaltet ist und die erste Welle (40) abschnittsweise innerhalb der zweiten Welle (41) verläuft, **dadurch gekennzeichnet, dass** die Trennkupplung (50) als Lamellenkupplung ausgebildet ist, deren Eingangsseite (51) durch Innenlamellen ausgebildet ist, welche axial neben dem Rotor (11) der ersten elektrischen Rotationsmaschine (10) auf der ersten Welle (40) angeordnet sind, und Außenlamellen der Trennkupplung (50) als deren Ausgangsseite (52) mit der zweiten Welle (41) verbunden sind.

2. Antriebseinheit (1) nach Anspruch 1, **dadurch gekennzeichnet, dass** die erste elektrische Rotationsmaschine (10) zumindest bereichsweise radial sowie axial innerhalb eines von der zweiten elektrischen Rotationsmaschine (20) radial begrenzten Raums angeordnet ist.

3. Antriebseinheit (1) nach Anspruch 2, **dadurch gekennzeichnet, dass** die erste elektrische Rotationsmaschine (10) als Innenläufermotor ausgebildet ist und die zweite elektrische Rotationsmaschine (20) als Außenläufermotor ausgebildet ist, wobei der Stator (12) der ersten elektrischen Rotationsmaschine (10) sowie der Stator (22) der zweiten elektrischen Rotationsmaschine (20) mechanisch aneinander fixiert sind.

4. Antriebseinheit (1) nach Anspruch 3, **dadurch gekennzeichnet, dass** die Statoren (12, 22) der beiden elektrischen Rotationsmaschinen (10, 20) auf einem gemeinsamen Stator-Träger (32) angeordnet sind.

5. Antriebseinheit (1) nach Anspruch 3, **dadurch gekennzeichnet, dass** die Statoren (12, 22) der beiden elektrischen Rotationsmaschinen (10, 20) integrale Bestandteile einer Stator-Einheit (31) sind.

6. Antriebseinheit (1) nach einem der vorhergehenden Ansprüche, **dadurch gekennzeichnet, dass** die Antriebseinheit (1) eine erste Übersetzungsstufe (70) umfasst, wobei die erste Übersetzungsstufe (70) durch ein Anschlusselement (4) der Antriebseinheit (1), welches ein innenverzahntes Zahnrad (5) umfasst, und die erste Welle (40), welche ein Element mit einer Außenverzahnung (46) aufweist, ausgebildet ist, wobei die Verzahnung des innenverzahnten Zahnrades (5) sowie die Außenverzahnung (46) zwecks Übertragung der Drehbewegung vom Anschlusselement (4) auf die erste Welle (40) miteinander kämmen.

7. Antriebsanordnung (100) mit einer Antriebseinheit (1) gemäß einem der Ansprüche 1 bis 6 sowie mit einer Verbrennungskraftmaschine (110), die mittels eines Abtriebselements (111) der Verbrennungskraftmaschine (110) drehfest mit dem Rotor (11) der ersten elektrischen Rotationsmaschine (10) gekoppelt oder koppelbar ist.

8. Antriebsanordnung (100) nach Anspruch 7, **dadurch gekennzeichnet, dass** die Antriebsanordnung (100) einen mit dem Anschlusselement (4) der Antriebseinheit (1) drehfest verbundenen Schwingungsdämpfer (101) sowie ein mechanisch an die Verbrennungskraftmaschine (110) angeschlossenes Gehäuseelement (62) umfasst, wobei der Schwingungsdämpfer (101) in dem Gehäuseelement (62) angeordnet ist.

## Claims

1. A drive unit (1) for a drive train of an electrically driven motor vehicle, in particular a hybrid motor vehicle, having a first electric rotary machine (10) and a second electric rotary machine (20) and a first shaft (40) and a second shaft (41), wherein a rotor (11) of the first electric rotary machine (10) is connected in a rotationally fixed manner to the first shaft (40) and a rotor (21) of the second electric rotary machine (20) is connected in a rotationally fixed manner to the second shaft (41), and wherein the drive unit (1) further comprises a separating clutch (50) with which the rotor (11) of the first electric rotary machine (10) can be or is connected to the second shaft (41) for torque transmission,
wherein one of the two electric rotary machines (10, 20) is arranged, at least in regions, radially and axially within a space radially delimited by the other electric rotary machine (10, 20), the separating clutch (50) is connected with its input side (51) to the first shaft (40), and with its output side (52), to the second shaft (41), the drive unit (1) has a second transmission stage (71) which is formed by a toothing of the second shaft (41) and a first gear (82) which meshes with the toothing of the second shaft (41),
a torque provided by the rotor (11) of the first electric rotary machine (10) is transmitted via the second transmission stage (71) when the separating clutch (50) is closed, and wherein the two shafts (40, 41) are arranged coaxially, the second shaft (41) is designed as a hollow shaft and the first shaft (40) runs in sections within the second shaft (41), **characterized in that** the separating clutch (50) is designed as a multi-plate clutch, the input side (51) of which is formed by inner plates, which are arranged axially next to the rotor (11) of the first electric rotary machine (10) on the first shaft (40), and outer plates of the separating clutch (50) are connected to the second shaft (41) as its output side (52).

2. The drive unit (1) according to claim 1, **characterized in that** the first electric rotary machine (10) is arranged, at least in regions, radially and axially within a space radially delimited by the second electric rotary machine (20).

3. The drive unit (1) according to claim 2, **characterized in that** the first electric rotary machine (10) is designed as an internal rotor motor and the second electric rotary machine (20) is designed as an external rotor motor, wherein the stator (12) of the first electric rotary machine (10) and the stator (22) of the second electric rotary machine (20) are mechanically fixed to one another.

4. The drive unit (1) according to claim 3, **characterized in that** the stators (12, 22) of the two electric rotary machines (10, 20) are arranged on a common stator carrier (32).

5. The drive unit (1) according to claim 3, **characterized in that** the stators (12, 22) of the two electric rotary machines (10, 20) are integral components of a stator unit (31).

6. The drive unit (1) according to any one of the preceding claims, **characterized in that** the drive unit (1) comprises a first transmission stage (70), wherein the first transmission stage (70) is formed by a connecting element (4) of the drive unit (1), which comprises an internally-toothed gear (5), and the first shaft (40), which has an element with external teeth (46), wherein the teeth of the internally-toothed gear (5) and the external teeth (46) mesh with one another for the purpose of transmitting the rotary movement from the connecting element (4) to the first shaft (40).

7. A drive assembly (100) having a drive unit (1) according to one of claims 1 to 6 and having an internal combustion engine (110), which is or can be coupled in a rotationally fixed manner to the rotor (11) of the first electric rotary machine (10) via a drive element (111) of the internal combustion engine (110).

8. The drive assembly (100) according to claim 7, **characterized in that** the drive assembly (100) comprises a vibration damper (101) connected in a rotationally fixed manner to the connection element (4) of the drive unit (1) and a housing element (62) mechanically connected to the internal combustion engine (110), wherein the vibration damper (101) is arranged in the housing element (62).

## Revendications

1. Unité d'entraînement (1) pour une chaîne cinématique d'un véhicule automobile à entraînement électrique, en particulier d'un véhicule automobile hybride, comportant une première machine rotative électrique (10) et une seconde machine rotative électrique (20) ainsi qu'un premier arbre (40) et un second arbre (41), dans laquelle un rotor (11) de la première machine rotative électrique (10) est relié de manière fixe en rotation au premier arbre (40) et un rotor (21) de la seconde machine rotative électrique (20) est relié de manière fixe en rotation au second arbre (41) et l'unité d'entraînement (1) présentant en outre un embrayage de coupure (50) avec lequel le rotor (11) de la première machine rotative électrique (10) peut être relié ou est relié au second arbre (41) pour la transmission du couple,
dans laquelle l'une des deux machines rotatives électriques (10, 20) est agencée au moins partiellement radialement et axialement à l'intérieur d'un espace délimité radialement par l'autre machine rotative électrique (10, 20) respective, l'embrayage de coupure (50) est relié, avec son côté entrée (51), au premier arbre (40) et avec son côté sortie (52), au second arbre (41), l'unité d'entraînement (1) présente un second étage de transmission (71) qui est constitué d'une denture du second arbre (41) et un premier engrenage (82) venant s'engrener avec la denture du second arbre (41),
un couple fourni par le rotor (11) de la première machine rotative électrique (10) est transmis par l'intermédiaire du second étage de transmission (71) lorsque l'embrayage de coupure (50) est fermé, et les deux arbres (40, 41) étant agencés coaxialement, le second arbre (41) étant réalisé sous forme d'arbre creux et le premier arbre (40) s'étendant par sections à l'intérieur du second arbre (41), **caractérisée en ce que** l'embrayage de coupure (50) est réalisé sous forme d'embrayage à disques, dont le côté entrée (51) est formé par des disques intérieurs qui sont agencés axialement à côté du rotor (11) de la première machine rotative électrique (10) sur le premier arbre (40), et des disques extérieurs de l'embrayage de coupure (50) sont reliés au second arbre (41) en tant que côté sortie (52) de celui-ci.

2. Unité d'entraînement (1) selon la revendication 1, **caractérisée en ce que** la première machine rotative électrique (10) est agencée au moins partiellement radialement et axialement à l'intérieur d'un espace délimité radialement par la seconde machine rotative électrique (20).

3. Unité d'entraînement (1) selon la revendication 2, **caractérisée en ce que** la première machine rotative électrique (10) est réalisée comme un moteur à rotor interne et la seconde machine rotative électrique (20) est réalisée comme un moteur à rotor externe, le stator (12) de la première machine rotative électrique (10) ainsi que le stator (22) de la seconde machine rotative électrique (20) étant fixés mécaniquement l'un à l'autre.

4. Unité d'entraînement (1) selon la revendication 3, **caractérisée en ce que** les stators (12, 22) des deux machines rotatives électriques (10, 20) sont agencés sur un support de stator (32) commun.

5. Unité d'entraînement (1) selon la revendication 3, **caractérisée en ce que** les stators (12, 22) des deux machines rotatives électriques (10, 20) font partie intégrante d'une unité stator (31).

6. Unité d'entraînement (1) selon l'une quelconque des revendications précédentes, **caractérisée en ce que** l'unité d'entraînement (1) comprend un premier étage de transmission (70), le premier étage de transmission (70) étant formé par un élément de liaison (4) de l'unité d'entraînement (1), qui comprend un engrenage à denture interne (5), et le premier arbre (40), qui présente un élément avec une denture externe (46), la denture de l'engrenage à denture interne (5) et la denture externe (46) venant s'engrener mutuellement pour transmettre le mouvement de rotation de l'élément de liaison (4) au premier arbre (40).

7. Ensemble d'entraînement (100) comportant une unité d'entraînement (1) selon l'une quelconque des revendications 1 à 6 ainsi qu'un moteur à combustion interne (110) qui est couplé ou qui peut être couplé fixe en rotation avec le rotor (11) de la première machine rotative électrique (10) au moyen d'un élément d'entraînement (111) du moteur à combustion interne (110).

8. Ensemble d'entraînement (100) selon la revendication 7, **caractérisé en ce que** l'ensemble d'entraînement (100) comprend un amortisseur de vibrations (101) qui est relié fixe en rotation à l'élément de liaison (4) de l'unité d'entraînement (1) ainsi qu'un élément boîtier (62) qui est relié mécaniquement au moteur à combustion interne (110), l'amortisseur de vibrations (101) étant agencé dans l'élément boîtier (62).
